# EUROPÄISCHE PATENTSCHRIFT

(11) **EP 2 023 475 B1**
(45) Veröffentlichungstag und Bekanntmachung des Hinweises auf die Patenterteilung: **12.10.2016**
(21) Anmeldenummer: 07015324.2
(22) Anmeldetag: 04.08.2007
(51) Int. Cl.: H02M 3/158, H02J 3/38

(54) **Wechselrichter für eine geerdete Gleichspannungsquelle, insbesondere einen Photovoltaikgenerator**
Inversion for a grounded DC source, in particular a photovoltaic generator
Inversion pour une source de tension continue reliée à la terre, en particulier un générateur photovoltaïque

(43) Veröffentlichungstag der Anmeldung: 11.02.2009
(73) Patentinhaber: SMA Solar Technology AG, 34266 Niestetal (DE)
(72) Erfinder: Engel, Bernd, 38302 Wolfenbüttel (DE); Mallwitz, Regine, 34131 Kassel (DE); Zacharias, Peter, Prof. Dr., 34131 Kassel (DE)
(74) Vertreter: Lahnor, Peter

(56) Entgegenhaltungen:
- DE-A-102005 023 291
- DE-A1- 10 221 592
- DE-A1- 10 225 020
- DE-A1-102004 037 446
- DE-A1-102005 046 379
- DE-B3-102004 030 912
- DE-C1- 19 642 522
- DE-C1- 19 732 218
- US-A1- 2004 164 557
- US-A1- 2004 165 408
- US-A1- 2007 047 277
- SHOYAMA M ET AL: 'Resonant switched capacitor converter with high efficiency' POWER ELECTRONICS SPECIALISTS CONFERENCE, 2004. PESC 04. Bd. 5, 20 Juni 2004, 2004 IEEE 35TH ANNUAL, AACHEN, GERMANY, Seiten 3780 - 3786, XP010738318 DOI: 10.1109/PESC.2004.1355143 ISBN: 978-0-7803-8399-9

## Beschreibung

Die Erfindung betrifft einen Wechselrichter für eine geerdete Gleichspannungsquelle, insbesondere einen Photovoltaikgenerator, eine Batterie oder eine Brennstoffzelle, zur Umwandlung der Gleichspannung in eine Wechselspannung mit einem DC/DC-Wandler und einem Puls-Wechselrichter, der von dem DC/DC-Wandler versorgt wird.

Bei Photovoltaikgeneratoren sind unvermeidbare parasitäre Kapazitäten vorhanden. Werden hochfrequenttaktende Pulswechselrichter zur Umwandlung der Generatorgleichspannung in eine netzfrequente Wechselspannung eingesetzt, können erhebliche zum Teil nicht tolerierbare AC-Ableitströme aus dem Photovoltaikgenerator gegen Erde fließen.

Auch große netzfrequente Potentialsprünge können wegen ihres steilen Spannungsanstiegs zu AC-Ableitströmen führen.

Aus der DE 10 2004 037 446 A1 ist ein transformatorloser Wechselrichter für eine solare Netzeinspeisung bekannt, der das Problem von kapazitiven Ableitströmen am Solargenerator beseitigen soll, welche einerseits Solarzellen beschädigen können und andererseits gefährliche Berührungsspannungen der Solarpanele entstehen lassen. Der nicht geerdete Solargenerator wird an einen geerdeten impulsweitengesteuerten Wechselrichter angeschlossen, der eine auf Erdpotential bezogene symmetrische +/- Spannung liefert. Hierbei wird ein symmetrischer Gleichspannungshochsetzsteller mit einem einzigen Schalter eingesetzt, so dass nur ein zu den Schaltern des Pulswechselrichters zusätzlicher Schalter benötigt wird. Durch die geringe Anzahl der Schalter sind zwar Schaltverluste gering, weil aber die Schaltung absolut symmetrische passive Bauelemente wie Drosseln und Kondensatoren benötigt, was in der Praxis schwierig ist, lassen sich kapazitive Ableitströme lediglich minimieren, jedoch nicht gänzlich vermeiden. Nachteilig ist auch, dass eine unmittelbare Erdung des Solargenerators nicht möglich ist.

In der DE 102 21 592 A1 wird ein Verfahren zum Umwandeln einer Gleichspannung einer Photovoltaikanlage in einen Wechselstrom vorgestellt. Hierbei sind zwischen Verbindungsleitungen an der Netzseite zwei getrennte Verbindungspfade vorgesehen, in denen jeweils ein Schalter sowie eine in Reihe geschaltete Diode vorgesehen. Dadurch soll der Wirkungsgrad verbessert werden, da keine mit einer Energierückeinspeisung in einen Pufferkondensator verbundenen Energieverluste auftreten können. Eine Erdung des Generators ist mit dieser Schaltung nicht möglich.

Die DE 10 2004 030 912 B3 beschreibt ein Verfahren zum Umwandeln einer Gleichspannung eines Photovoltaikgenerators in eine Wechselspannung, bei der mittels eines Schalters der Wechselspannungskreis vom Gleichspannungskreis entkoppelt wird. Dadurch werden hochfrequente Störungen durch Taktvorgänge vermieden. Eine direkte Erdung des Generators ist ebenfalls nicht möglich. Wie auch in den vorangegangenen Schaltungen werden die Solargeneratoren in bestimmten Phasen des inneren Energietransports vom Netz isoliert betrieben. Bei der periodischen erneuten elektrischen Verbindung des Solargenerators zum Netz werden dessen Kapazitäten jedoch geringfügig umgeladen, so dass sich das Potential des Solargenerators mit der Netzfrequenz ändert. Es bilden sich also zwischen zwei Schalttakten sowie durch Unsymmetrien beim Schalten Spannungsunterschiede, die kapazitive Ableitströme verursachen.

Prinzipiell lassen sich kapazitive Ableitströme nur gänzlich vermeiden, wenn das Potential des Photovoltaikgenerators gegenüber dem Erdpotential fest ist, d.h. der Generator unmittelbar geerdet wird. Eine Schaltung mit einem an dem Minuspol geerdeten Photovoltaikgenerator wird in der US 7,064,969 B2 erläutert. Diese umfasst eine Inverterschaltung mit einem zwischen zwei Kondensatoren gebildeten Erdungspunkt. Nachteilig ist eine sehr starke Beanspruchung der verwendeten Schalter durch die erforderliche Schaltungsanordnung. Bei dieser Schaltung wird dem geerdeten Solargenerator eine Parallelschaltung aus einem Pufferkondensator und einem Tief-/Hochsetzsteller nachgeschaltet. Der Solargenerator lädt den Pufferkondensator in Abhängigkeit von der zur Verfügung stehenden Solarleistung auf. Der Tief-/Hochsetzsteller lädt einen zweiten Kondensator. Den beiden in Reihe geschalteten Kondensatoren folgt eine Brückenschaltung, die über einen aus einer Drossel und einem Kondensator bestehenden Netzfilter eine sinusförmige Wechselspannung für die Einspeisung in ein Energieversorgungsnetz bereitstellt. Der Tief-/Hochsetzsteller ermöglicht das Aufladen des zweiten Halbbrückenkondensators auf dieselbe Spannung wie sie für den Pufferkondensator für positive Spannung vorgesehen ist. Dafür wird der invertierende Tief-/Hochsetzsteller zum Beispiel mit einem festen Spannungs-Übersetzungsfaktor von -1 betrieben. Dadurch kann die aktuelle Solargeneratorspannung bezogen auf die Zwischenkreisspannung verdoppelt werden. Die Spannung wenigstens am ersten Kondensator entspricht dabei direkt der Ausgangsspannung des Solargenerators. Um den Solargenerator im Punkt maximaler Leistung zu betreiben, muss die Energieübertragung in das Netz mit dem angeschlossenen Wechselrichter entsprechend gesteuert werden.

Nachteilig bei dieser Schaltung ist die direkte Kopplung der Solargeneratorspannung an die Zwischenkreisspannung. Die in weiten Bereichen schwankende MPP-Spannung eines Solargenerators muss daher stets größer sein als die maximal mögliche Scheitelwertspannung des Netzes. Außerdem bewirken hartes Schalten und magnetisches Zwischenspeichern von Energie relativ große Verluste und groß dimensionierte passive Bauelemente.

Eine Erdung ist auch in der Schaltung nach der US 2007/0047 277 A1 möglich, wobei auch hier Schalter hoch beansprucht werden. Es sind nämlich zwei Hoch-/Tiefsetzsteller mit nur einem Schalter, dem DC/AC-Wandler, der als ein- oder dreiphasige Voll- oder Halbbrücke ausgeführt werden kann, vorgeschaltet. Die gleiche Bauweise der Drosseln der Hoch-/Tiefsetzsteller auf einem Kern reduziert entsprechende Unsymmetrien weitgehend. Der Einsatz nur eines Schalters für beide Hoch-/Tiefsetzsteller führt jedoch zwangsläufig zu dessen hoher Beanspruchung im Schaltbetrieb.

Eine Erdung ist ebenfalls in der Schaltung nach der DE 197 32 218 C1 vorgesehen. In dieser Schrift wird eine Wandlerschaltung vorgeschlagen, die den Nachteil des kapazitiven Ausgangsfilters vermeidet. Sie erfordert aber bis zu neun aktive Schalter, von denen mindestens zwei gleichzeitig mit hoher Frequenz schalten. Dies beeinflusst sowohl die Robustheit als auch die Wirkungsgrade dieser Schaltung in erheblicher Weise negativ.

Ein Wechselrichter gemäß der DE 196 42 522 C1 umfasst eine Schalteranordnung mit mehreren Schaltern, die über einen Mikrocontroller angesteuert werden, damit ein kompliziertes Schaltmuster erzeugt wird.

Bei dieser Lösung wird eine Schaltung mit einfachem geerdeten Solargenerator beschrieben, die kapazitive Ableitströme prinzipbedingt verhindert. Die Schaltung enthält fünf aktive Schalter, wobei ein bzw. zwei Schalter gleichzeitig hochfrequent schaltend den mittleren Ausgangsstrom bereitstellen. Nachteilig bei dieser Schaltung ist, dass lückende Strompulse in das Netz eingeprägt werden, die einen kapazitives Netzfilter erforderlich machen, der prinzipbedingt durch seinen eigenen Blindleistungsbedarf den Leistungsfaktor, aber auch den Wirkungsgrad der Schaltung im Teillastbereich verschlechtert. Außerdem wird bei dieser Schaltung durch die hohe Zahl gleichzeitig in Serie am Stromfluss beteiligter Bauelemente der Wirkungsgrad beeinträchtigt.

Weiterhin sind andere unter der sogenannten Stringtechnologie einzuordnenden Lösungen bekannt. In der DE 102 25 020 A1, DE 10 2005 046 379 A1 sowie US 7 099 169 B2 werden Schaltungsanordnungen beschrieben, die aus einem geteilten Solargenerator bestehen, dessen Mittelpunkt geerdet ist. Damit haben alle Teile des Solargenerators ein festes Potential und kapazitive Ableitströme können prinzipiell nicht fließen. Da die beiden Gleichstromquellen unterschiedliche Ergiebigkeit haben bzw. unterschiedliche Spannungen erzeugen können, ist eine Schaltung zur Kompensation der Leistungsdifferenzen und Spannungen erforderlich, wie in der DE 102 25 020 A1 vorgeschlagen wird. Nachteilig bei diesen Schaltungsvorschlägen sind die hohen Spannungsdifferenzen im Solargenerator und an den Schaltern sowie die zusätzlichen Verluste in der Kompensationsschaltung und die mindestens vier hochfrequent getakteten Schalter.

Ein weiteres bisher nicht gelöstes Problem ist außerdem, dass Photovoltaik-Generatoren sehr unterschiedlich degradieren, je nachdem mit welchem Pol sie geerdet und mit welcher Technologie sie hergestellt wurden. Generatoren mit kristallinen und polykristallinen Zellen werden daher bevorzugt mit dem negativen Anschluss geerdet, während Dünnschichtmodule mit Rückseitenkontakt bevorzugt am positiven Anschluss geerdet werden. Wünschenswert ist eine Schaltungsanordnung, die beide Varianten ermöglicht und auch eine Erdung an einem künstlichen, z. B. mittleren, Erdungspunkt erlaubt, so dass insgesamt drei Erdungsvarianten möglich sind.

Aus der DE 10 2005 023 291 A1 ist ein Wechselrichter bekannt, der an seinem DC-Eingang von einem Hochsetzsteller und einem Resonanzwandler gefolgt wird, mit einem Transformator, einem Resonanzkondensator und einer Resonanzdrossel.

Der Erfindung liegt die Aufgabe zugrunde, einen Wechselrichter zu schaffen, mit dem kapazitive Ableitströme mit geringem schaltungstechnischen Aufwand verhindert werden und eine geringe Beanspruchung von Schaltern möglich ist.

Diese Aufgabe wird durch einen Wechselrichter der eingangs genannten Art gelöst, wobei der als Schwingkreiswechselrichter ausgebildete DC/DC-Wandler als reihenkompensierter Schwingkreiswechselrichter mit einer Drossel und einer in Reihe liegenden Kondensatoranordnung, bestehend aus zwei oder mehr Schwingkreiskondensatoren, ausgeführt ist, an jeden der Teil-Schwingkreiskondensatoren ein Gleichrichterbrückenzweig, umfassend 2 Dioden, angeschlossen ist, der mit seinem Plus- bzw. Minuspol an einander ausgangseitigen Zwischenkreiskondensatoren angeschlossen ist, wobei diese in Reihe geschaltet sind, so dass der DC/DC-Wandler wenigstens zwei bipolare Ausgangsspannungen liefert und mit dem Puls-Wechselrichter mit einem geteilten Spannungszwischenkreis kombiniert wird, der vom Schwingkreis-Wechselrichter versorgt wird.

Die Erfindung erlaubt eine Schaltungsanordnung mit hohem Wirkungsgrad durch minimale Schaltverluste im DC/DC-Wandler. Dem DC-Generator wird dabei ein festes Potential gegenüber Erdpotenzial ermöglicht. Außerdem ist es möglich, einen kontinuierlichen Strom in das Netz einzuspeisen. Zudem kann grundsätzlich eine beliebige Erdung des Photovoltaik-Generators erreicht werden. HF-Ableitströme des Photovoltaik-Generators oder eines anderen Gleichspannungsgenerators werden vermieden. Durch die Erfindung ist außerdem ein hoher Wirkungsgrad auch im Teillastbereich möglich sowie eine geringe Baugröße der Energiespeicher im DC/DC-Wandler wegen einer hohen möglichen Schaltfrequenz.

Die DC-Quelle kann durch die Erfindung prinzipiell am positiven oder negativen Pol oder symmetrisch zu GND geerdet werden.

Die Erfindung beruht auf dem Grundgedanken einer Kombination eines DC/DC-Wandlers mit zwei bipolaren Ausgangsspannungen, die einen Puls-Wechselrichter mit einem geteilten Spannungszwischenkreis versorgen.

Ein Vorteil des erfindungsgemäß eingesetzten DC/DC-Wandlers besteht darin, dass insbesondere durch einen Serienresonanzschwingkreis mit geteiltem Schwingkreiskondensator einerseits eine weitestgehende Entlastung der beteiligten Schalter von Schaltverlusten erreicht wird und andererseits zwei gegenüber dem Erdpotenzial bipolar geladene Spannungszwischenkreise hinreichend symmetrisch versorgt werden. Hiermit kann durch einen nachgeschalteten Puls-Wechselrichter in bekannter Weise Strom in ein einphasiges Netz mit Erdbezug oder ein 3-phasiges Netz mit geerdetem Sternpunkt eingespeist werden. Durch die besondere Topologie der Schaltung sind Photovoltaik-Generatorseite und Netzseite gleichstrommäßig getrennt. Diese galvanische Isolation wird durch vorzugsweise zwei oder auch mehr Schwingkreiskondensatoren erreicht. Da diese Kondensatoren die DC-Differenzspannung zwischen Photovoltaik-Generatorseite und den Bestandteilen des Gleichspannungs-Zwischenkreises des Wechselrichters aufnehmen, ist es möglich, den Photovoltaik-Generator sowohl mit seinem negativen Anschluss als auch mit seinem positiven Anschluss zu erden.

Erfindungsgemäß ist vorgesehen, dass der Schwingkreiswechselrichter als reihenkompensierter Schwingkreiswechselrichter mit einer Drossel und einer in Reihe liegenden Kondensatoranordnung ausgeführt ist. Durch die Anwendung des Prinzips eines reihenkompensierten Schwingkreiswechselrichters wird praktisch ein vollständiger Wegfall der Ausschaltverluste der aktiven Schalter erreicht. Je nach Steuerverfahren lassen sich auch die Einschaltverluste dieser Schalter und die Kommmutierungsverluste der Dioden praktisch vermeiden. Dazu lässt man den Strom des Schwingkreises lücken bzw. nur leicht überlappen, so dass die Stromsteilheit während des Schaltvorgangs vom Schwingkreis selbst limitiert wird. Einschaltverluste werden so weitgehend und Ausschaltverluste von aktiven Schaltern praktisch vollständig vermieden.

Eine Teilung des Spannungszwischenkreises erfolgt erfindungsgemäß dadurch, dass mindestens zwei parallele mit der Schwingkreis-Drossel verbundene Schwingkreiskondensatoren vorhanden sind. Der Stromfluss wird dadurch praktisch wenigstens in zwei Pfade aufgeteilt. Damit der Strom hinreichend gleichmäßig auf die Kondensatoren aufgeteilt wird, weisen die zugehörigen parallelen Schwingkreiskondensatoren die gleiche Kapazität auf.

Eine Verbesserung des Wirkungsgrades lässt sich außerdem dadurch erreichen, dass die sekundäre aktive Gleichrichterdiode in ihrer Leitphase von einem ebenfalls leitenden FET überbrückt wird.

Sowohl kristalline und polykristalline Zellen als auch Dünnschichtzellen können in geeigneter Weise geerdet werden, wenn nach einer bevorzugten Ausführungsform der Erfindung parallel zur Gleichspannungsquelle am Zwischenkreis zwei in Reihe geschaltete Kondensatoren vorhanden sind, wobei ein Erdungspunkt wahlweise zwischen den Kondensatoren oder an einem Pluspol der Quelle liegt, wobei der am Pluspol liegende Kondensator überbrückt wird oder an einem Minuspol der Quelle liegt, wobei dann der am Minuspol liegende Kondensator überbrückt wird.

Weitere vorteilhafte Ausgestaltungen der Erfindung sind in den Unteransprüchen gekennzeichnet.

Ein Ausführungsbeispiel wird anhand der Zeichnungen näher erläutert, wobei weitere vorteilhafte Weiterbildungen der Erfindung und Vorteile derselben beschrieben sind.

Es zeigen:
- Fig. 1: ein Prinzipschaltbild des erfindungsgemäßen Wechselrichters;
- Fig. 2: ein erstes Ausführungsbeispiel der DC/DC-Wandlerstufe des erfindungsgemäßen Wechselrichters, bei dem ein negativer Generatorpol geerdet ist;
- Fig. 3: ein zweites Ausführungsbeispiel der DC/DC-Wandlerstufe des erfindungsgemäßen Wechselrichters, bei dem ein positiver Generatorpol geerdet ist;
- Fig. 4: ein drittes Ausführungsbeispiel der DC/DC-Wandlerstufe des erfindungsgemäßen Wechselrichters, bei dem der DC-Generator virtuell zentral geerdet ist;
- Fig. 5: ein viertes Ausführungsbeispiel der erfindungsgemäßen DC/DC-Wandlerstufe mit erhöhtem Ausgangsspannungsbereich;
- Fig. 6: eine Stromverlaufskurve einer Schwingkreisdrossel bei einer ersten hohen Generatorspannung, und
- Fig. 7: eine Stromverlaufskurve der Schwingkreisdrossel bei einer zweiten geringeren Generatorspannung.

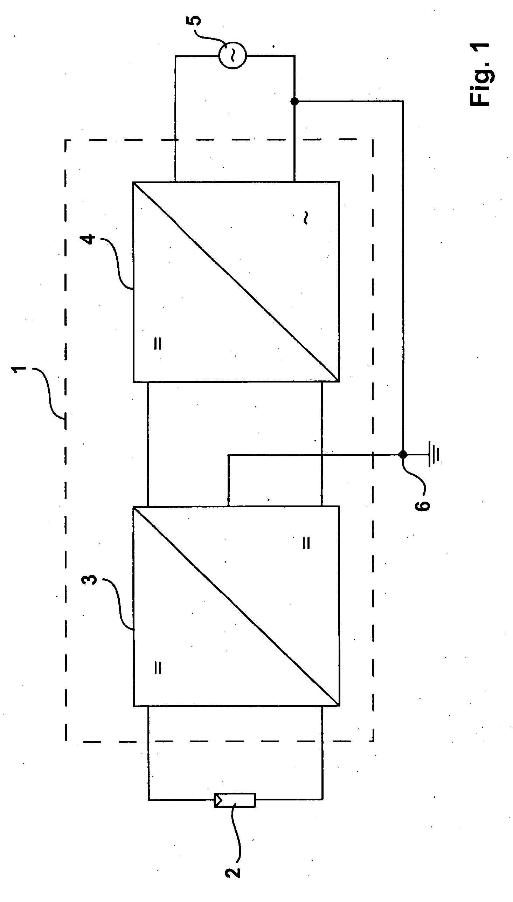

Fig. 1 zeigt ein Prinzipschaltbild des erfindungsgemäßen Wechselrichters 1. Einer DC-Quelle, die in Fig. 1 als Photovoltaikgenerator 2 dargestellt ist, ist ein DC/DC-Wandler 3 nachgeschaltet. Dieser DC/DC-Wandler 3 versorgt einen DC/AC-Wandler 4, dessen Ausgang mit einem Energieversorgungsnetz 5 verbunden ist und zur Einspeisung in das Energieversorgungsnetz 5 dient. Der DC/DC-Wandler 3 ist dabei so ausgeführt, dass eine Erdung der DC-Quelle 2 als auch des Netzes 5 an einem Erdungspunkt 6 möglich ist.

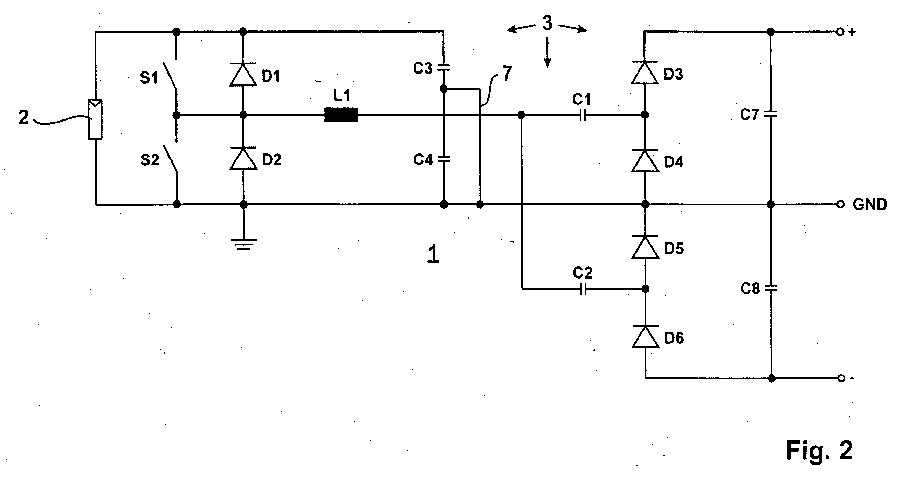

Fig. 2 zeigt einen DC/DC-Wandler 3 des erfindungsgemäßen Wechselrichters 1 bestehend aus den Schaltern S1 und S2 mit den jeweils antiparallelen Dioden D1 bzw. D2, die abwechselnd eingeschaltet werden, der Schwingkreisinduktivität L1, die als konzentriertes Bauelement oder als zusammengesetztes Bauelement ausgeführt sein kann, den zwei anteiligen Schwingkreiskondensatoren C1 und C2 sowie zwei Gleichrichterzweigen. Die Gleichrichterzweige bestehen jeweils aus zwei Dioden. Der erste Gleichrichter besteht aus den Dioden D3 und D4, der zweite Gleichrichter aus den Dioden D5 und D6. Die in Reihe geschalteten Kondensatoren C3 und C4 entsprechen dem üblicherweise der DC-Quelle, hier Solargenerator (2), nachgeschalteten Pufferkondensator.

Durch die beschriebene und dargestellte Verschaltung werden bei symmetrischer Dimensionierung und symmetrischer Belastung symmetrische Ausgangsspannungen an den Zwischenkreis-Kondensatoren C7 und C8 gegenüber Erdpotenzial erzeugt, die dann Eingangsspannungen für allgemein bekannte Wechselrichter 4 mit Spannungszwischenkreis für die Netzeinspeisung oder den Inselnetzaufbau in ein- oder mehrphasiger Ausführung sind. Das heißt, den Kondensatoren C7 und C8 folgt ein allgemein bekannter DC/AC-Wandler 4, z.B. in Voll- oder Halbbrückenschaltung in ein- oder mehrphasiger Ausführung.

Wie Fig. 2 veranschaulicht, ist der DC/DC-Wandler 3 als Schwingkreis-Wechselrichter ausgeführt ist. Der Schwingkreis besteht aus einer Drossel L1 und einer Kondensatoranordnung mit den Kondensatoren C1 und C2. Diese bilden einen Serienresonanzschwingkreis, so dass ein reihenkompensierter Schwingkreiswechselrichter entsteht. Durch die Halbbrücken-Gleichrichter, einerseits bestehend aus den Dioden D3 und D4 sowie andererseits bestehend aus den Dioden D5 und D6, wird an den Kondensatoren C7 und C8 jeweils eine Gleichspannung aufgebaut.

Die dargestellten Kondensatoren C7 und C8 repräsentieren den geteilten DC-Zwischenkreis des nachgeschalteten Pulswechselrichters.

Der DC/DC-Wandler 3 verfügt über zwei in Reihe geschaltete HalbleiterSchaltelemente S1, S2. Diese sind parallel zum Generator 2 geschaltet. Zwischen den Schaltelementen S1, S2 liegt die Drossel L1. Je nachdem welcher der Schalter geschlossen ist, startet ein Schwingungsvorgang mit positivem Strom (S1 geschlossen) oder mit negativem Strom (S2 geschlossen) durch L1. Der aus der Drossel L1 und der Kondensatoranordnung C1, C2 bestehende Schwingkreis ist also am Verbindungspunkt der Halbleiterschalter S1, S2 angeschlossen, so dass durch abwechselndes Schalten der Halbleiterschalter ein positiver und negativer Ausgangsstrom fließen kann.

Die Halbleiterschalter S1, S2 werden hochfrequent getaktet. Jeweils nur ein Schalter S1 oder S2 ist geschlossen.

Ist der Schalter S1 geschlossen, fließt ein Strom durch den Kondensator C1 und die Diode D3 sowie durch den Kondensator C2 und die Diode D5. Bei nachfolgendem Polaritätswechsel des Schwingkreisstromes werden entsprechend die Dioden D4 und D6 leitend, während die Dioden D3 und D5 sperren. Beim Polaritätswechsel öffnet der Schalter S1 und der Strom fließt nur über die Diode D1. Wird am Ende oder nach der Leitphase von D1 der Schalter S2 geschlossen, beginnt ein Stromfluss durch die Drossel L1 in derselben Polarität wie während der Leitphase von D1, so dass die Dioden D4 und D6 über die Kondensatoren C1 und C2 Strom erhalten bis bei erneutem Polaritätswechsel des Schwingkreisstromes dann die Dioden D3 und D5 leiten, während die Dioden D4 und D6 sperren.

Durch die Dioden D4 und D5 ist ein Ladungsausgleich der Kondensatoren C1 und C2 nicht möglich, so dass die gewünschte Teilung der Ströme für die Zwischenkreis-Kondensatoren C7 und C8 erfolgen kann. Die Schwingkreiskondensatoren C1, C2 weisen die gleiche Kapazität auf, so dass eine Stromsymmetrie vorliegt.

Durch die Schwingkreiskondensatoren C1 und C2 sind die einzelnen "Belastungsschaltungen" des positiven und negativen Teils des Spannungszwischenkreises für Gleichstrom voneinander isoliert. Dadurch lassen sich unterschiedliche Spannungniveaus bedienen. Der Stromkreis muss nur für die hochfrequenten Ladeströme geschlossen sein.

Parallel zu dem Generator 2 sind zwei in Reihe liegende Kondensatoren C3, C4 geschaltet. Der am Minuspol liegende Kondensator C4 ist mit der Leitung 7 kurzgeschlossen. Die in Fig. 2 gezeigte Variante ermöglicht also eine Erdung des Generators an seinem Minuspol.

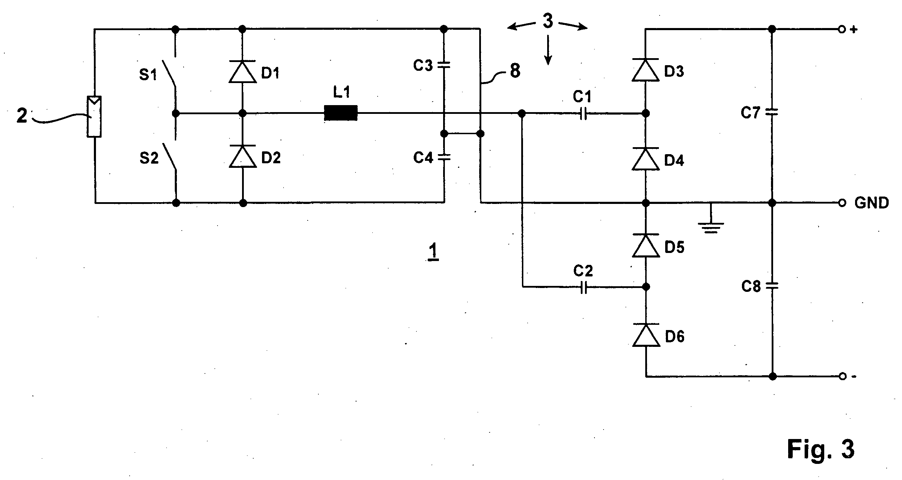

Gemäß Fig. 3 kann auch der Pluspol des Generators 2 geerdet werden. Hierzu muss der am Pluspol liegende Kondensator C3 kurzgeschlossen werden, was durch die Leitung 8 veranschaulicht wird. Die Schaltungsanordnung entspricht ansonsten der in Fig. 1 beschriebenen.

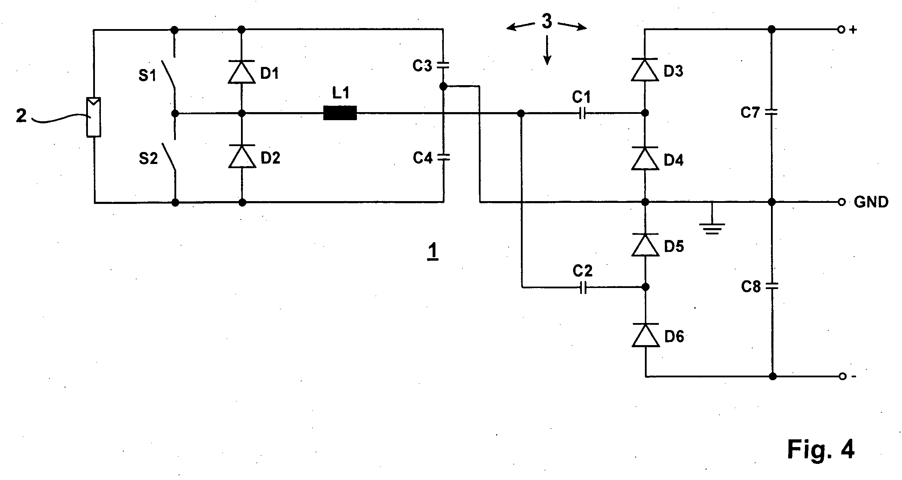

Auch eine Variante, bei der die Generatorspannung symmetrisch zum Erdpotential (GND) liegt, ist möglich. Diese Variante wird in Fig. 4 gezeigt. Der Erdungspunkt liegt dabei zwischen den Kondensatoren C3 und C4. Hierbei gilt vorzugsweise C3 = C4. Die Kondensatoren C3 und C4 wirken als DC-Spannungsteiler.

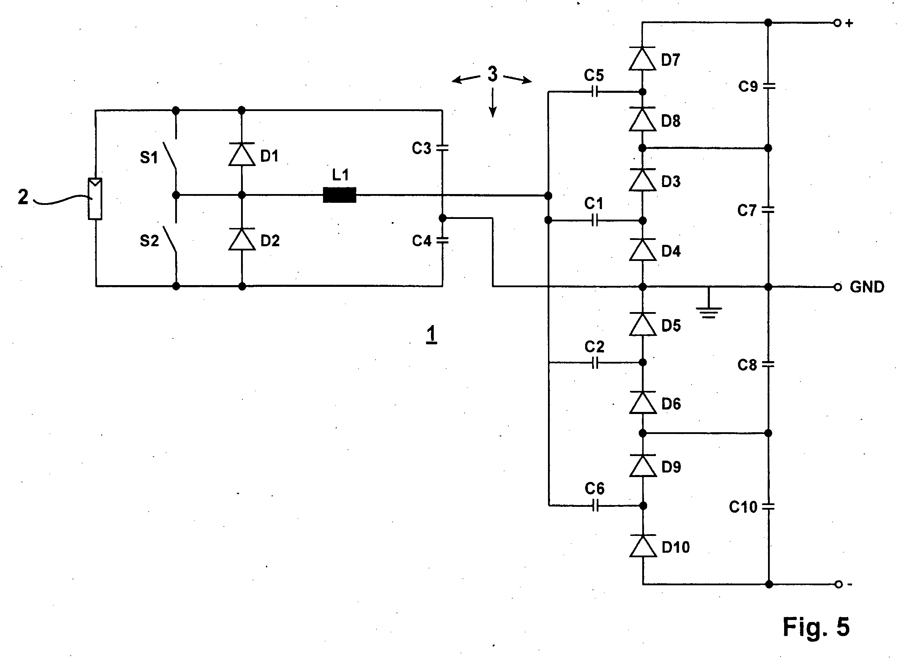

In Fig. 5 wird ein Ausführungsbeispiel mit vier Zwischenkreis-Kondensatoren C7; C8; C9 und C10 gezeigt, die in Reihe geschaltet sind. Dadurch kann die Ausgangsspannung des DC/DC-Wandlers erheblich höhere Werte annehmen als die Ausgangsspannung, die der DC-Generator 2 zur Verfügung stellt. Auf diese Weise ist der erfindungsgemäße DC/DC-Wandler skalierbar für verschiedene Spannungsbereiche.

Durch die Serienschaltung seiner Ausgangsstufen wirkt der erfindungsgemäße DC/DC-Wandler "hochsetzend", obwohl die Grundschaltung "reihenkompensierter Schwingkreiswechselrichter" zunächst nur "tiefsetzendes" Verhalten hat.

In der Schaltung gemäß Fig. 5 sind 4 Schwingkreiskondensatoren C1, C2, C5 und C6 vorhanden, an die sich jeweils ein Gleichrichter bestehend aus den Dioden D3, D4 bzw. D5, D6 bzw. D7, D8 bzw. D9, D10 anschließt. Die 8 Dioden D3, D4, D5, D6, D7, D8, D9 und D10 sind in Reihe geschaltet. Sind die Kondensatoren C1, C2, C5 und C6 gleich groß dimensioniert, ergeben sich zusätzlich zu GND-Potential (0 Volt) vier weitere gleichmäßige verteilte Spannungsabfälle. Der Spannungsabfall über jedem der Kondenstaoren C1, C2, C5 bzw. C6 entspricht prinzipbedingt maximal der Ausgangsspannung des DC-Generators 2. Durch die beschriebene DC-mäßige Isolation der einzelnen Stufen ist eine Erweiterung auf höhere Spannungsübersetzungswerte möglich. Figur 5 zeigt praktisch vier Stufen, so dass eine Vervierfachung der DC-Generatorspannung möglich ist.

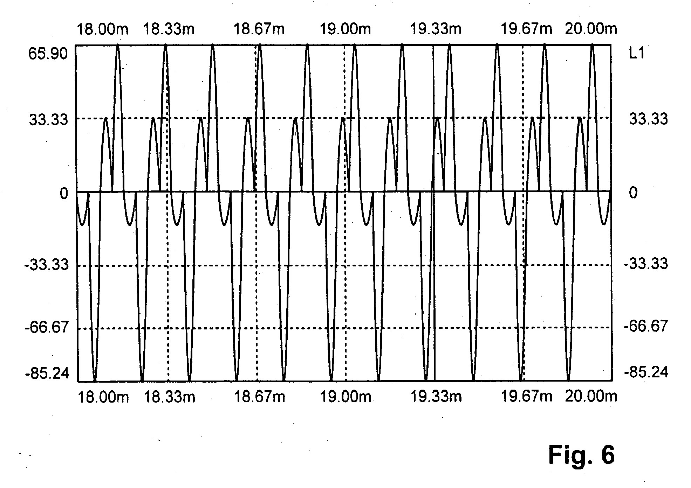

Einen typischen Stromverlauf durch die Schwingkreisinduktivität L1 zeigt für den Fall der Strom-Lückgrenze Figur 6. In Fig. 6 beträgt die Generatorspannung 700 Volt. Nach dem Einschalten des Schaltelementes S1 beginnt der Strom durch den aus der Drossel L1 und den Kondensatoren C1/C2 gebildeten Schwingkreis zu fließen. Dabei wird der Stromanstieg durch die Drossel L1 begrenzt. Durch eine vorzugsweise Dimensionierung von C1 = C2 wird der Strom hinreichend gleichmäßig auf die Zwischenkreiskondensatoren aufgeteilt.

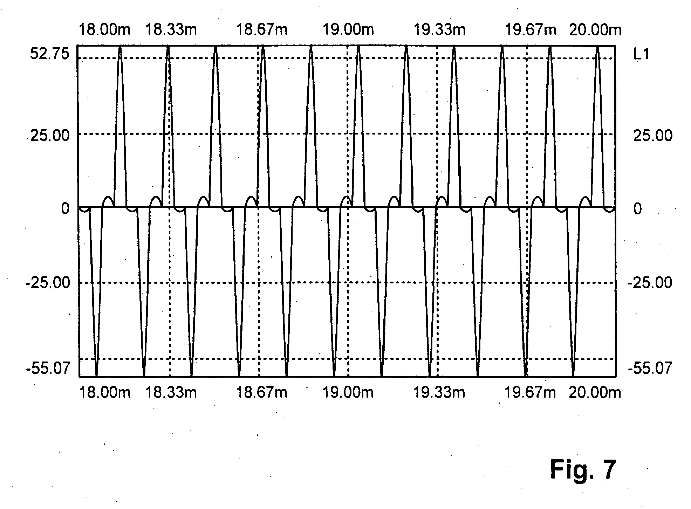

Nach der Leitphase des Schaltelementes S1 schließt sich die Leitphase der antiparallelen Diode D1 durch die Stromeinprägung des Schwingkreises an. Wahrend dieser Leitphase kann man das Schaltelement S1 praktisch spannungsfrei ausschalten. Wenn der Schwingkreisstrom durch D1 erneut den Nullwert erreicht, kommmutiert der Strom mit im Wesentlichen durch die Drossel L1 begrenzte Steilheit ab. Dies führt zu einer drastischen Verringerung der Sperr-Erhol-Verluste gegenüber einem harten Schalten. Figur 7 zeigt den Stromverlauf an der Stabilitätsgrenze U_{C7}=U_{C8}.= Generatorspannung. Hierbei beträgt die Generatorspannung 400 Volt und die Stabilitätsgrenze 350 Volt.

## Patentansprüche

1. Wechselrichter (1) für eine geerdete Gleichspannungsquelle, insbesondere einen Photovoltaikgenerator (2), eine Batterie oder eine Brennstoffzelle, zur Umwandlung der Gleichspannung in eine Wechselspannung mit einem DC/DC-Wandler (3) und einem Puls-Wechselrichter, der von dem DC/DC-Wandler (3) versorgt wird, wobei der DC/DC-Wandler (3) als Schwingkreis-Wechselrichter ausgeführt ist und einen Serienresonanzschwingkreis umfasst.
**dadurch gekennzeichnet,**
**dass** der als Schwingkreiswechselrichter ausgebildete DC/DC-Wandler (3) als reihenkompensierter Schwingkreiswechselrichter mit einer Drossel (L1) und einer in Reihe liegenden Kondensatoranordnung, bestehend aus zwei oder mehr Schwingkreiskondensatoren (C1,C2,C5,C6), ausgeführt ist, dass an jeden der Schwingkreiskondensatoren (C1,C2,C5,C6) ein Gleichrichter-brückenzweig, umfassend 2 Dioden (D3, D4; D5, D6,...), angeschlossen ist, der mit seinem Plus- bzw. Minuspol an ausgangseitigen Zwischenkreiskondensatoren angeschlossen ist, wobei diese in Reihe geschaltet sind, so dass der DC/DC-Wandler(3) wenigstens zwei bipolare Ausgangsspannungen liefert und mit dem Puls-Wechselrichter (4) mit einem geteilten Spannungszwischenkreis kombiniert wird, der vom Schwingkreis-Wechselrichter versorgt wird.

2. Wechselrichter nach Anspruch 1,
**dadurch gekennzeichnet,**
**dass** die zugehörigen parallelen Schwingkreiskondensatoren (C1, C2) die gleiche Kapazität aufweisen.

3. Wechselrichter nach Anspruch 1 oder 2,
**dadurch gekennze ichnet,**
dass durch mindestens vier Schwingkreiskondensatoren (C1, C2, C5, C6) mehrere Spannungsniveaus gleicher Polarität geschaffen werden können.

4. Wechselrichter nach einem der vorhergehenden Ansprüche,
**dadurch gekennzeichnet,**
**dass** parallel zur Gleichspannungsquelle (2) am DC-Zwischenkreis zwei in Reihe geschaltete Kondensatoren (C3, C4) vorhanden sind, wobei ein Erdungspunkt wahlweise zwischen den Kondensatoren (C3, C4) oder an einem Pluspol der Quelle liegt, wobei der am Pluspol liegende Kondensator (C3) überbrückt wird, oder an einem Minuspol der Quelle liegt, wobei dann der am Minuspol liegende Kondensator (C4) überbrückt wird.

5. Wechselrichter nach einem der vorangehenden Ansprüche,
**dadurch gekennzeichnet,**
**dass** der DC/DC-Wandler (3) zwei in Reihe geschaltete Halbleiter-Schaltelemente (S1, S2) aufweist, die parallel zur Gleichspannungsquelle geschaltet sind, wobei der aus der Drossel (L1) und der Kondensatoranordnung bestehende Schwingkreis am Verbindungspunkt der Halbleiterschaltelemente (S1, S2) angeschlossen ist, so dass durch abwechselndes Schalten der Halbleiterschaltelemente (S1, S2) ein positiver und negativer Ausgangsstrom fließt.

6. Wechselrichter nach Anspruch 5,
**dadurch gekennzeichnet,**
**dass** die mit dem Schwingkreis verbundenen Halbleiterschaltelemente (S1, S2) hochfrequent abwechselnd geschaltet werden, wobei von beiden Halbleiterschaltelementen (S1, S2) sowohl bei positivem als auch bei negativem Ausgangsstrom immer nur ein Halbleiterschaltelement hochfrequent getaktet wird.

7. Wechselrichter nach Anspruch 6,
**dadurch gekennzeichnet,**
**dass** der Pulswechselrichter eine Brückenschaltung mit mindestens zwei aktiven Halbleiterschaltern umfasst, so dass insgesamt zusammen mit den mit dem Schwingkreis verbundenen Halbleiterschaltern mindestens vier aktive Schalter vorhanden sind und die Schalter der Brückenschaltung den Ausgangsstrom des Wechselrichters (1) zur Netzeinspeisung modulieren und die Schalter des Schwingkreises die Zwischenkreisspannung steuern.

## Claims

1. Inverter (1) for a grounded DC voltage source, in particular a photovoltaic generator (2), a battery or a fuel cell, for converting the DC voltage into an AC voltage with a DC / DC converter (3) and a pulse inverter that is supplied by the DC / DC converter (3), wherein the DC / DC converter (3) is designed as a resonant circuit inverter and comprises a series resonant circuit
**characterized in that** the DC / DC converter (3) designed as a resonant circuit inverter is designed as a series-compensated resonant circuit inverter with a choke (L1) and a capacitor arrangement consisting of two or more resonant circuit capacitors (C1, C2, C5, C6) connected in series thereto, and **in that** a rectifier bridge branch comprising two diodes (D3, D4; D5, D6, ...) and being coupled with its positive or negative pole, respectively, to output-side DC link capacitors is coupled to each of the resonant circuit capacitors (C1, C2, C5, C6), wherein the DC link capacitors are connected in series, such that the DC / DC converter (3) provides at least two bipolar output voltages and is combined with the pulse inverter (4) with a divided voltage intermediate circuit that is supplied by the resonant circuit inverter.

2. The inverter of claim 1, **characterized in that** the associated parallel resonant circuit capacitors (C1, C2) have the same capacity.

3. The inverter of claim 1 or 2, **characterized in that** a plurality of voltage levels of the same polarity can be created by at least four oscillating circuit capacitors (C1, C2, C5, C6).

4. Inverter according to one of the preceding claims, **characterized in that** in parallel to the DC voltage source (2) two series-connected capacitors (C3, C4) are provided at the DC link, wherein a grounding point is located selectively between the capacitors (C3, C4) or at a positive pole of the source, in which case the capacitor located at the positive terminal (C3) is bridged, or is located at a negative pole of the source, in which case the capacitor (C4) located at the negative pole is bridged.

5. Inverter according to one of the preceding claims, **characterized in that** the DC / DC converter (3) comprises two series-connected semiconductor switching elements (S1, S2) that are connected in parallel to the DC voltage source, wherein the resonant circuit consisting of the inductor (L1) and the capacitor arrangement is coupled to the connection point of the semiconductor switching elements (S1, S2), such that by alternately switching the semiconductor switching elements (S1, S2) a positive and negative output current flows.

6. The inverter of claim 5, **characterized in that** the semiconductor switching elements (S1, S2) connected to the resonant circuit are switched alternately at a high frequency, wherein both at positive and at negative output current always only one semiconductor switching element of the two semiconductor switching elements (S1, S2) is clocked at a high frequency.

7. The inverter of claim 6, **characterized in that** the pulse inverter comprises a bridge circuit with at least two active semiconductor switches, such that together with the semiconductor switches associated with the resonant circuit at least four active switches are present in total and the switches of the bridge circuit modulate the output current of the inverter (1) for the mains supply and the switches of the resonant circuit control the DC link voltage.

## Revendications

1. Onduleur (1) pour une source de tension continue mise à la terre, notamment pour un générateur photovoltaïque (2), une batterie ou une cellule électrochimique, pour convertir la tension continue en une tension alternative, avec un convertisseur DC/DC (3) et un onduleur à impulsions qui est alimenté par le convertisseur DC/DC (3),
le convertisseur DC/DC (3) étant réalisé en tant qu'onduleur de circuit oscillant et comprenant un circuit résonnant sériel,
**caractérisé en ce que**
le convertisseur DC/DC (3) conçu en tant qu'onduleur de circuit oscillant est réalisé en tant qu'onduleur à circuit oscillant compensé en série, avec un restricteur (L1) et un agencement de condensateurs placés en ligne, constitué de deux condensateurs de circuit oscillant (C1, C2, C5, C6) ou plus,
**en ce que** sur chacun des condensateurs de circuit oscillant (C1, C2, C5, C6) est raccordée une branche de pont redresseur, comprenant deux diodes (D3, D4 ; D5, D6, ...), qui par son pôle positif ou négatif est raccordée sur des condensateurs de circuit intermédiaire du côté sortie,
ces derniers étant montés en série, de sorte que le convertisseur DC/DC (3) fournisse au moins deux tensions de sortie bipolaires et soit associé avec l'onduleur à impulsions (4) avec un circuit intermédiaire de tension divisé qui est alimenté par l'onduleur de circuit oscillant.

2. Onduleur selon la revendication 1,
**caractérisé en ce que**
les condensateurs de circuit oscillant (C1, C2) associés parallèles présentent la même capacité.

3. Onduleur selon la revendication 1 ou la revendication 2,
**caractérisé en ce que**
par au moins quatre condensateurs de circuit oscillant (C1, C2, C5, C6), il est possible de créer plusieurs niveaux de tension de polarité identique.

4. Onduleur selon l'une quelconque des revendications précédentes,
**caractérisé en ce**
**qu'**à la parallèle de la source de tension continue (2), sur le circuit intermédiaire DC sont présents deux condensateurs (C3, C4) montés en série,
un point de mise à la terre se situant au choix entre les condensateurs (C3, C4) ou sur un pôle positif de la source, le condensateur (C3) situé sur le pôle positif étant shunté, ou se situant sur un pôle négatif de la source, le condensateur (C4) situé sur le pôle négatif étant alors shunté.

5. Onduleur selon l'une quelconque des revendications précédentes,
**caractérisé en ce que**
le convertisseur DC/DC (3) comporte deux éléments de commutation (S1, S2) à semi-conducteurs, montés en série, qui sont montés à la parallèle de la source de tension continue, le circuit oscillant constitué du restricteur (L1) et de l'agencement de condensateurs étant raccordé sur le point de liaison des éléments de commutation (S1, S2) à semi-conducteurs, de sorte que par une commutation alternée des éléments de commutation (S1, S2) à semi-conducteurs, un courant de sortie positif et négatif circule.

6. Onduleur selon la revendication 5, **caractérisé en ce que** les éléments de commutation (S1, S2) à semi-conducteurs reliés avec le circuit oscillant sont commutés alternativement à haute fréquence, parmi les deux éléments de commutation (S1, S2) à semi-conducteurs, aussi bien pour un courant de sortie positif que négatif, toujours seulement un élément de commutation à semi-conducteur étant cadencé haute fréquence.

7. Onduleur selon la revendication 6, **caractérisé en ce que** l'onduleur à impulsions comprend un circuit en pont avec au moins deux commutateurs à semi-conducteurs actifs, de sorte qu'en commun avec les commutateurs à semi-conducteurs reliés avec le circuit oscillant, au total au moins quatre commutateurs soient présents et les commutateurs du circuit en pont modulent le courant de sortie de l'onduleur (1) pour l'injection dans le réseau et les commutateurs du circuit oscillant commandent la tension du circuit intermédiaire.
